# EUROPEAN PATENT SPECIFICATION

(11) **EP 2 813 931 B1**
(45) Date of publication and mention of the grant of the patent: **30.08.2017**
(21) Application number: 14171650.6
(22) Date of filing: 09.06.2014
(51) Int. Cl.: G06Q 10/10, H04L 12/58, G06F 9/44, G06Q 50/00

(54) **Electronic apparatus and method for providing services thereof**
Elektronische Vorrichtung und Verfahren zur Bereitstellung von Diensten dafür
Appareil électronique et procédé pour fournir des services

(30) Priority: 10.06.2013 KR 20130066180
(43) Date of publication of application: 17.12.2014
(73) Proprietor: Samsung Electronics Co., Ltd., Gyeonggi-do 443-742 (KR)
(72) Inventor: Yang, Ji-yun, Incheon (KR)
(74) Representative: HGF Limited

(56) References cited:
- US-A1- 2009 150 156
- US-A1- 2013 014 039

## Description

### TECHNICAL FIELD

The present disclosure relates to an electronic apparatus and a method for providing a service thereof. More particularly, the present disclosure relates to an electronic apparatus which can integrate a variety of services using an interactive application and provide the services, and a method for providing a service thereof.

### BACKGROUND

Modem electronic apparatuses (e.g., mobile phones) provide a variety of services through a variety of applications. Because each of the services is provided by an independent application, a user is required to separately execute a corresponding application to use each service. For example, the user is required to execute a weather information application to perform a weather information providing service, and required to execute a scheduling application to perform a scheduling service.

For example, the user may be inconvenienced by being required to separately find an application as desired and execute the application in order to use a specific service. In addition, because applications for providing services have respective User Interfaces (UIs), the users may require time to learn the corresponding UI in order to be accustomed to using the UI of each application in order to perform each service with ease.

Therefore, there is a demand for a method for providing a variety of services through an integrated UI of a single application.

The above information is presented as background information only to assist with an understanding of the present disclosure. No determination has been made, and no assertion is made, as to whether any of the above might be applicable as prior art with regard to the present disclosure.
Document US 2013/0014039 discloses an integrated graphical user interface system, including an integration component that automatically causes a portion of a first graphical user interface and a portion of a second graphical user interface to be simultaneously displayed on a display screen in an integrated graphical user interface.
Document US 2009/0150156 discloses a system and method for providing a natural language voice user interface in an integrated voice navigation services environment.

### SUMMARY

There is provided a method for providing a service of an electronic apparatus as set out in claim 1, and an electronic apparatus as set out in claim 13.

Aspects of the present disclosure are to address at least the above-mentioned problems and/or disadvantages and to provide at least the advantages described below. Accordingly, and aspect of the present disclosure is to provide an electronic apparatus which can perform a variety of services using an integrated chatting User Interface (UI) through a single interactive application, and a control method thereof.

In accordance with an aspect of the present disclosure, a method for providing a service of an electronic apparatus is provided. The method includes executing an interactive application which integrates a plurality of services and provides the plurality of services, in response to selection of at least one of the plurality of services, performing a first displaying operation to display a chatting screen for chatting with the at least one selected service, and in response to input of a user message through the chatting screen, analyzing the user message according to the at least one selected service and performing a function of one or more of the at least one selected service corresponding to the user message.

In accordance with another aspect of the present disclosure, the analyzing of the user message and the performing of the function may include analyzing the user message, generating a control command, and transmitting the control command to an external apparatus corresponding to the at least one selected service.

In accordance with another aspect of the present disclosure, the analyzing of the user message and the performing of the function may include, in response to receiving feedback information responding to the control command from the external apparatus, performing a second displaying operation to generate a response message corresponding to the feedback information and displaying the response message on the chatting screen.

In accordance with another aspect of the present disclosure, the user message and the response message may be displayed on the chatting screen in a form of a speech bubble.

In accordance with another aspect of the present disclosure, the performing the first displaying operation may include, in response to execution of the interactive application, displaying a User Interface (UI) to select at least one service from among the plurality of services, and, in response to selection of at least one of the plurality of services through the UI, displaying a chatting screen for chatting with the at least one selected service.

In accordance with another aspect of the present disclosure, the method may further include, in response to selection of at least two services from among the plurality of services through the UI, and if the feedback information received from an external apparatus corresponding to one of the at least two selected services is information related to the other service of the at least two selected services, analyzing the feedback information and transmitting a control command to an external apparatus corresponding to the other service of the at least two selected services.

In accordance with another aspect of the present disclosure, the performing the second displaying operation may include, if the at least one selected service includes a service corresponding to an apparatus that is not controlled by the control command, displaying a message informing that the user message is not recognized on the chatting screen.

In accordance with another aspect of the present disclosure, the analyzing of the user message and the performing of the function may include analyzing the user message, generating a control command, and performing a function corresponding to the at least one selected service in the electronic apparatus according to the control command.

In accordance with another aspect of the present disclosure, the interactive application may include a plurality of programs to provide the plurality of services, and a platform program in which the plurality of programs are added on and which integrates and manages the plurality of services.

In accordance with another aspect of the present disclosure, the analyzing the user message and the performing of the function may include, in response to input of the user message, generating a control command corresponding to the user message by performing natural language processing with respect to the user message in the platform program.

In accordance with another aspect of the present disclosure, the analyzing of the user message and the performing of the function may include, in response to downloading a program for providing a service according to a user command, installing the downloaded program in the platform program.

In accordance with another aspect of the present disclosure, the method may further include, in response to selection of a predetermined icon existing on the chatting screen, displaying a control menu to control the at least one selected service.

In accordance with another aspect of the present disclosure, the plurality of services may include at least one of a scheduling service, a memo service, a weather information providing service, a social network service, an external apparatus control service, a product purchasing service, and a content storage service.

In accordance with another aspect of the present disclosure, the method may further include receiving an inquiry relating to the control command from the external apparatus, and transmitting a confirmation message in response to the received inquiry.

In accordance with another aspect of the present disclosure, the method may further include generating the confirmation message according to a user input for responding to the inquiry message.

In accordance with another aspect of the present disclosure, the method may further include, in response to receiving the inquiry, automatically generating the confirmation message according to a user setting.

In accordance with another aspect of the present disclosure, a non-transitory computer-readable storage medium may be provided. The non-transitory computer-readable storage medium may storing may store instructions that, when executed, execute an interactive application which integrates a plurality of services and provides the plurality of services, in response to selection of at least one of the plurality of services, perform a first displaying operation to display a chatting screen for chatting with the at least one selected service, and in response to input of a user message through the chatting screen, analyze the user message according to the at least one selected service and perform a function of one or more of the at least one selected service corresponding to the user message

In accordance with another aspect of the present disclosure, an electronic apparatus is provided. The electronic apparatus includes a display, a communicator configured to communicate with an external apparatus, and a controller configured to, in response to execution of an interactive application which integrates a plurality of services and provides the services, and selection of at least one of the plurality of services, control the display to display a chatting screen for chatting with the at least one selected service, and to, in response to input of a user message is input through the chatting screen, analyze the user message according to the at least one selected service and perform a function of the at least one selected service corresponding to the user message.

In accordance with another aspect of the present disclosure, the controller may analyze the user message, generate a control command, and may control the communicator to transmit the control command to an external apparatus corresponding to the at least one selected service.

In accordance with another aspect of the present disclosure, in response to receiving feedback information responding to the control command from the external apparatus through the communicator, the controller may generate a response message corresponding to the feedback information and control the display to display the response message on the chatting screen.

In accordance with another aspect of the present disclosure, the controller may control the display to display the user message and the response message on the chatting screen in a form of a speech bubble.

In accordance with another aspect of the present disclosure, in response to execution of the interactive application, the controller may display a UI to select at least one service from among the plurality of services, and, in response to selection of at least one of the plurality of services through the UI, the controller may control the display to display a chatting screen for chatting with the at least one selected service.

In accordance with another aspect of the present disclosure, in response to selection of at least two services from among the plurality of services through the UI, and if the feedback information received from an external apparatus corresponding to one of the at least two selected services is information related to the other service of the at least two selected services, the controller may analyze the feedback information and control the communicator to transmit a control command to an external apparatus corresponding to the other service of the at least two selected services.

In accordance with another aspect of the present disclosure, if the at least one selected service includes a service corresponding to an apparatus that is not controlled by the control command, the controller may control the display to display a message informing that the user message is not recognized on the chatting screen.

In accordance with another aspect of the present disclosure, the controller may analyze the user message, generate a control command, and perform a function corresponding to the at least one selected service in the electronic apparatus according to the control command.

In accordance with another aspect of the present disclosure, the interactive application may include a plurality of programs to provide the plurality of services, and a platform program in which the plurality of programs are added on and which integrates and manages the plurality of services.

In accordance with another aspect of the present disclosure, the platform program may include an element to perform natural language processing with respect to the user message.

In accordance with another aspect of the present disclosure, in response to downloading of a program for providing a service according to a user command, the controller may install the downloaded program in the platform program.

In accordance with another aspect of the present disclosure, in response to selection of a predetermined icon existing on the chatting screen, the controller may control the display to display a control menu to control the at least one selected service.

In accordance with another aspect of the present disclosure, the plurality of services may include at least one of a scheduling service, a memo service, a weather information providing service, a social network service, an external apparatus control service, a product purchasing service, and a content storage service.

In accordance with another aspect of the present disclosure, the controller may receive an inquiry relating to the control command from the external apparatus, and transmits a confirmation message in response to the received inquiry.

In accordance with another aspect of the present disclosure, the controller may generate the confirmation message according to a user input for responding to the inquiry message.

In accordance with another aspect of the present disclosure, the controller may, in response to receiving the inquiry, automatically generate the confirmation message according to a user setting.

Other aspects, advantages, and salient features of the disclosure will become apparent to those skilled in the art from the following detailed description, which, taken in conjunction with the annexed drawings, discloses various embodiments of the present disclosure.

### BRIEF DESCRIPTION OF THE DRAWINGS

The above and other aspects, features, and advantages of certain embodiments of the present disclosure will be more apparent from the following description taken in conjunction with the accompanying drawings, in which:
FIG. 1 is a view illustrating a service providing system according to an embodiment of the present disclosure;
FIG. 2 is a block diagram schematically illustrating an electronic apparatus according to an embodiment of the present disclosure;
FIG. 3 is a block diagram illustrating an electronic apparatus in detail according to an embodiment of the present disclosure;
FIG. 4 is a view to illustrate an interactive application stored in a storage according to an embodiment of the present disclosure;
FIG. 5 is a view illustrating a starting screen of an interactive application according to an embodiment of the present disclosure;
FIGS. 6, 7, 8, 9, 10, 11, 12, 13, 14A, 14B, 14C and 14D are views to illustrate a method for providing a variety of services using an interactive application according to various embodiments of the present disclosure;
FIG. 15 is a flowchart to illustrate a method for providing a service of an electronic apparatus according to an embodiment of the present disclosure;
FIG. 16 is a sequence diagram to illustrate a method for providing a service in a service providing system according to an embodiment of the present disclosure; and
FIGS. 17A and 17B are views to illustrate a language defined in a plug-in interface module according to an embodiment of the present disclosure.

The same reference numerals are used to represent the same elements throughout the drawings.

### DETAILED DESCRIPTION

The following description with reference to the accompanying drawings is provided to assist in a comprehensive understanding of various embodiments of the present disclosure as defined by the claims and their equivalents. It includes various specific details to assist in that understanding but these are to be regarded as merely exemplary. Accordingly, those of ordinary skill in the art will recognize that various changes and modifications of the various embodiments described herein can be made. In addition, descriptions of well-known functions and constructions may be omitted for clarity and conciseness.

The terms and words used in the following description and claims are not limited to the bibliographical meanings, but, are merely used by the inventor to enable a clear and consistent understanding of the present disclosure. Accordingly, it should be apparent to those skilled in the art that the following description of various embodiments of the present disclosure is provided for illustration purpose only and not for the purpose of limiting the present disclosure as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

By the term "substantially" it is meant that the recited characteristic, parameter, or value need not be achieved exactly, but that deviations or variations, including for example, tolerances, measurement error, measurement accuracy limitations and other factors known to those of skill in the art, may occur in amounts that do not preclude the effect the characteristic was intended to provide.

In the following description, same reference numerals are used for the same elements when they are depicted in different drawings. The matters defined in the description, such as detailed construction and elements, are provided to assist in a comprehensive understanding of various embodiments. Thus, it is apparent that various embodiments can be carried out without those specifically defined matters. Also, functions or elements known in the related art are not described in detail because they would obscure the various embodiments with unnecessary detail.

Terms as used in the present disclosure are used to describe the various embodiments of the present disclosure, and are not intended to limit the present disclosure. Singular terms are intended to include plural forms, unless the context makes it clear that plural forms are not intended.

According to various embodiments of the present disclosure, an electronic device may include communication functionality. For example, an electronic device may be a smart phone, a tablet Personal Computer (PC), a mobile phone, a video phone, an e-book reader, a desktop PC, a laptop PC, a netbook PC, a Personal Digital Assistant (PDA), a Portable Multimedia Player (PMP), an mp3 player, a mobile medical device, a camera, a wearable device (e.g., a Head-Mounted Device (HMD), electronic clothes, electronic braces, an electronic necklace, an electronic appcessory, an electronic tattoo, or a smart watch), and/or the like.

According to various embodiments of the present disclosure, an electronic device may be a smart home appliance with communication functionality. A smart home appliance may be, for example, a television, a Digital Video Disk (DVD) player, an audio, a refrigerator, an air conditioner, a vacuum cleaner, an oven, a microwave oven, a washer, a dryer, an air purifier, a set-top box, a TV box (e.g., Samsung HomeSync™, Apple TV™, or Google TV™), a gaming console, an electronic dictionary, an electronic key, a camcorder, an electronic picture frame, and/or the like.

According to various embodiments of the present disclosure, an electronic device may be a medical device (e.g., Magnetic Resonance Angiography (MRA) device, a Magnetic Resonance Imaging (MRI) device, Computed Tomography (CT) device, an imaging device, or an ultrasonic device), a navigation device, a Global Positioning System (GPS) receiver, an Event Data Recorder (EDR), a Flight Data Recorder (FDR), an automotive infotainment device, a naval electronic device (e.g., naval navigation device, gyroscope, or compass), an avionic electronic device, a security device, an industrial or consumer robot, and/or the like.

According to various embodiments of the present disclosure, an electronic device may be furniture, part of a building/structure, an electronic board, electronic signature receiving device, a projector, various measuring devices (e.g., water, electricity, gas or electro-magnetic wave measuring devices), and/or the like that include communication functionality.

According to various embodiments of the present disclosure, an electronic device may be any combination of the foregoing devices. In addition, it will be apparent to one having ordinary skill in the art that an electronic device according to various embodiments of the present disclosure is not limited to the foregoing devices.

According to various embodiments of the present disclosure, an electronic apparatus may correspond to an electronic device. According to various embodiments of the present disclosure, an external apparatus may correspond to an electronic device.

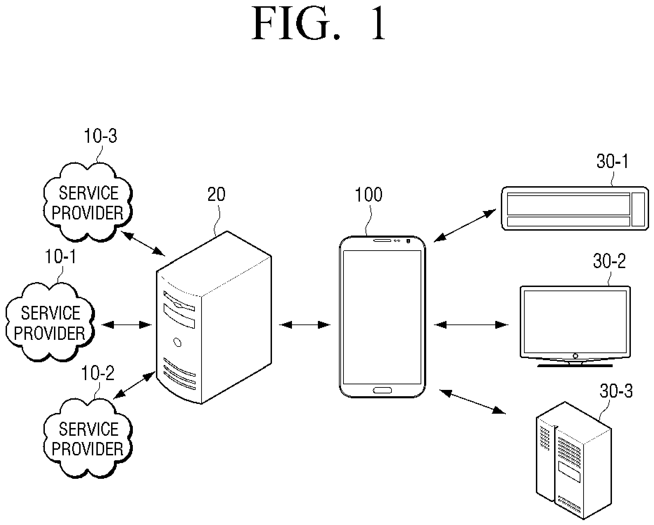

FIG. 1 is a view illustrating a service providing system according to an embodiment of the present disclosure.

Referring to FIG. 1, the service providing system includes a plurality of service providers 10-1, 10-2, and 10-3, a service storage server 20, an electronic apparatus 100, and a at least one external apparatus (e.g., a plurality of external apparatuses 30-1, 30-2, and 30-3).

The applicable service provider 10 (e.g., a service provider selected from the service provider 10-1, service provider 10-2, and service provider 10-3) packages service programs for providing services to users according to a pre-defined convention, and transmits the service programs to the service storage server 20. For example, the service provider 10 may package the service programs in the format of gzip, or the like. In this case, the packaged service programs may include plug-in profile information created in the form of JavaScript Object Notation (JSON). The service program may be autonomously executed. However, the packaging of the service program in a gzip format is merely an example and the service program may be a program in a library form that can be executed only by an interactive application.

In addition, as illustrated in FIG. 1, each of the plurality of service providers 10-1, 10-2, and 10-3 may transmit each respective service program to the service storage server 20.

The service storage server 20 stores the plurality of packaged service programs which are respectively received from the plurality of service providers 10-1, 10-2, and 10-3. If the service storage server 20 receives a program download request from the electronic apparatus (e.g., in response to receiving a program download request is received from the electronic apparatus 100), then the service storage server 20 may transmit the plurality of service programs to the electronic apparatus 100 in response to the program download request. According to various embodiments of the present disclosure, the service storage server 20 may transmit a subset of the plurality of service programs to the electronic apparatus 100 in response to the program download request. The program download request may identify specific programs, types of programs, or the like which the electronic apparatus 10 wants to receive from the storage server 20.

In this case, the service storage server 20 may perform a packing/unpacking function of the service program, a package publish/install function, package list table management, and package version management.

The electronic apparatus 100 downloads the plurality of service programs from the service storage server 20. The electronic apparatus 100 installs the plurality of downloaded service programs in a platform program of an interactive application. For example, the electronic apparatus 100 may integrate the plurality of service programs into a single interactive application to provide a plurality of services. In this case, the electronic apparatus 100 may provide the plurality of services using a chatting screen (e.g., an input screen, an input region, and/or the like) of the interactive application.

If a user message is input through the chatting screen of the interactive application to perform at least one service, then the electronic apparatus 100 may analyze the user message and generate a control command corresponding to the user message, and may perform a function of the at least one service according to the control command. As an example, in response to a user message being input through the chatting screen of the interactive application to perform at least one service, the electronic apparatus 100 may generate a corresponding control command and perform a function relating to the control command. For example, the electronic apparatus 100 may perform an internal function according to the control command and/or may transmit the control command to the external apparatus 30 corresponding to the service.

If the control command is received from the electronic apparatus 100, then the external apparatus 30 performs a specific function of the service according to the control command. In response to receiving a control command from the electronic apparatus, the external apparatus (e.g., selected from the external apparatus 30-1, the external apparatus 30-2, and the external apparatus 30-3), may perform a function relating to the control command. In this case, the external apparatus 30 may be a home appliance such as an air conditioner, a boiler, and/or the like. However, this is merely an example and the external apparatus 30 may include a server for providing services.

The external apparatus 30 may generate feedback information to respond to the control command and may transmit the feedback information to the electronic apparatus 100.

If the feedback information is received, then the electronic apparatus 100 may generate a response message using the feedback information and may display the response message on the chatting screen of the interactive application. For example, in response to receiving feedback information relating to the control command, the electronic apparatus 100 may generate a response message.

As described above, the user can perform a variety of services through the single integrated interactive application by means of the service providing system.

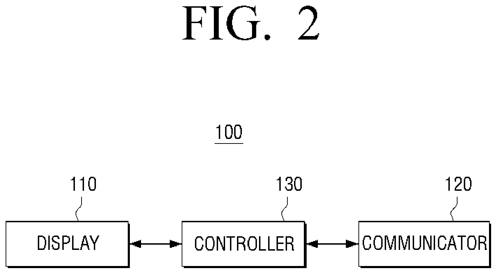

FIG. 2 is a block diagram schematically illustrating an electronic apparatus according to an embodiment of the present disclosure.

Referring to FIG. 2, the electronic apparatus 100 includes a display 110, a communicator 120, and a controller 130. The electronic apparatus 100 may be implemented by using a mobile phone, but, this is merely an example and the electronic apparatus 100 may be implemented by using various electronic apparatuses such as a tablet PC, a desktop PC, a notebook PC, a digital TV, and/or the like.

According to various embodiments of the present disclosure, the display 110 displays various image data and User Interfaces (UIs) under the control of the controller 130. In particular, when an interactive application is executed, the display 110 may display a starting screen through which a user can select at least one of the plurality of services that the user wishes to execute. In addition, the display 110 may display a chatting screen through which the user can chat with the selected at least one service. In particular, the display 110 may display a user message and a response message on the chatting screen in the form of a speech bubble.

According to various embodiments of the present disclosure, the communicator 120 communicates with various external apparatuses which can provide services. In particular, the communicator 120 may transmit a control command corresponding to a user message to the external apparatus 30, may receive feedback information responding to the control command from the external apparatus 30, and/or the like. The communicator 120 may download service programs from the service providing server 20.

According to various embodiments of the present disclosure, the controller 130 controls an overall operation of the electronic apparatus 100 according to a user's command. In particular, if the interactive application which integrates a plurality of services and provides the integrated services is executed, and, if at least one of the plurality of services is selected while the interactive application is executed, then the controller 130 controls the display 110 to display the chatting screen for chatting (e.g., communicating) with the selected at least one service. For example, the controller 130 controls the display 110 to display the chatting screen in response to selection of at least one of service when the interactive application is executed. In addition, if a user message is input through the chatting screen, then the controller 130 may analyze the user message according to the selected service and may perform a function of the at least one service corresponding to the user message.

The interactive application may include a plurality of programs for providing a plurality of services, and a platform program in which the plurality of programs are added on and which integrates the plurality of services and manages them. Specifically, if a service program for providing a service according to a user command is downloaded or otherwise received by the electronic apparatus 100, then the controller 130 may install the downloaded service program in the platform program. In addition, the platform program may include a configuration for performing natural language processing on a user message.

Specifically, if the interactive application is executed, then the controller 130 may control the display 110 to display a UI with which at least one service from among the plurality of installed services may be selected. The plurality of services recited herein may include at least one of a scheduling service, a memo service, a weather information providing service, a Social Network Service (SNS), an external apparatus control service, a product purchasing service, a content storing service, and/or the like.

If at least one service is selected through the UI, then the controller 130 may control the display 110 to display the chatting screen for chatting (e.g., communicating) with the at least one service. In this case, a single service may be selected through the UI. However, selection of a single service using the UI is merely an example. According to various embodiments of the present disclosure, a plurality of services may be selected through the UI.

If a user message is input through the chatting screen, then the controller 130 controls the display 110 to display the input user message, and analyzes the user message according to the selected at least one service. Specifically, if a first service is selected, then the controller 130 analyzes the user message according to the first service, and, if a second service is selected, then the controller 130 analyzes the user message according to the second service, even though the same user message is input. If a plurality of services are selected, then the controller 130 may analyze the user message according to each of the selected services. As an example, if a user message "How's weather today?" is input and the SNS is selected, then the controller 130 may analyze the input user message to correspond to the SNS. Thereafter, the controller 130 may generate a control command to upload a status indicator or communication message with the phrase "How's weather today?" to an SNS server. However, if the weather information providing service is selected, then the controller 130 may analyze the input user message to correspond to the weather information providing service and may generate a control command to request information on today's weather. If the user message is a natural language, then the controller 130 may analyze the user message using a natural language processor.

According to various embodiments of the present disclosure, if the selected at least one service includes a service for controlling the electronic apparatus 100, then the controller 130 may analyze the user message and may generate the control command. The controller 130 may control the electronic apparatus 100 according to the control command.

If the selected at least one service is a service for using an external apparatus, then the controller 130 may analyze the user message and may generate the control command. The controller 130 may control the communicator 120 to transmit the control command to the external apparatus 30 corresponding to at least one service. According to various embodiments of the present disclosure, if a plurality of services are selected, then the controller 130 may transmit the control command which is generated by analyzing the user message to external apparatuses corresponding to the plurality of services.

According to various embodiments of the present disclosure, the controller 130 may control the display 110 to display a response message using feedback information responding to the control command. For example, if feedback information responding to the control command is received from the external apparatus 30 through the communicator 120, then the controller 130 may generate a response message corresponding to the feedback information and may control the display 110 to display the response message on the chatting screen.

In this case, if the at least one service includes a service corresponding to an external apparatus that is not controlled by the transmitted control command, then the controller 130 may control the display 110 to display a message informing that the control command cannot be recognized on the chatting screen.

According to various embodiments of the present disclosure, if a plurality of services are selected through the UI, and feedback information received from an external apparatus corresponding to one of the plurality of selected services is information about another one of the plurality of services, then the controller 130 may analyze the feedback information and may control the communicator 120 to transmit the control command to an external apparatus corresponding to another one of the plurality of services.

According to various embodiments of the present disclosure, if a predetermined icon existing on the chatting screen is selected, then the controller 130 may control the display 110 to display a control menu for controlling at least one service. In this case, if a control icon is selected through the control menu, then the controller 130 may input the selected control icon to the chatting screen as a user message.

As described above, the user can perform various services through a single integrated interactive application by means of the electronic apparatus 100. In particular, the user may perform the services as though the user is talking (or otherwise communicating) with the personified service through the chatting screen of the interactive application.

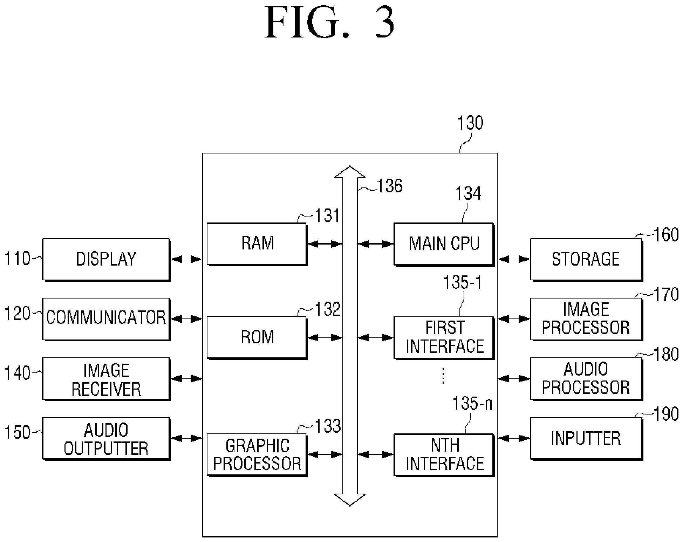

FIG. 3 is a block diagram illustrating an electronic apparatus in detail according to an embodiment of the present disclosure.

Referring to FIG. 3, the electronic apparatus 100 includes a display 110, a communicator 120, a controller 130, an image receiver 140, an audio outputter 150, a storage 160, an image processor 170, an audio processor 180, an inputter 190, and/or the like.

As illustrated in FIG. 3, the electronic apparatus 100 may be equipped with various functions such as a communication function, a broadcast receiving function, a moving image playback function, a display function, and/or the like. FIG. 3 illustrates overall elements of the electronic apparatus 100 according to an embodiment of the present disclosure. Accordingly, some of the elements illustrated in FIG. 3 may be omitted or changed and another element may be added according to various embodiments of the present disclosure.

According to various embodiments of the present disclosure, the display 110 displays at least one of a video frame which is a result of processing image data received from the image receiver 140 by the image processor 170, and may display various screens which are generated by a graphic processor 133. In particular, when an interactive application is executed, the display 110 may display a starting screen through which the user selects at least one service that the user wishes to execute from among a plurality of services. In addition, the display 110 may display a chatting screen for chatting (e.g., communicating) with the selected at least one service. In this case, the display 110 may display a user message input by the user on the chatting screen and a response message responding to a control command, and may display the user message and the response message in the form of a speech bubble, and/or the like.

According to various embodiments of the present disclosure, the communicator 120 is configured to communicate with various kinds of external apparatuses or external servers according to various kinds of communication methods. The communicator 120 may include various communication units such as a Wi-Fi unit, a Bluetooth unit, a Near Field Communication (NFC) unit, a wireless communication unit, and/or the like. In this case, the Wi-Fi unit, the Bluetooth unit, and the NFC unit may respectively perform communication in a Wi-Fi method, a Bluetooth method, and an NFC method. According to various embodiments of the present disclosure, the NFC unit may be operated in the NFC method, which uses a band of 13.56 MHz from among various RF-ID frequency bands such as 135 kHz, 13.56 MHz, 433 MHz, 860-960 MHz, and 2.45 GHz. If the Wi-Fi unit and/or the Bluetooth unit is used, then a variety of connection information such as a Service Set Identifier (SSID) and a session key is exchanged, connection is established using the connection information, and then, a variety of information is exchanged. The wireless communication unit refers to a unit that performs communication according to various communication standards such as IEEE, Zigbee, 3^{rd} Generation (3G), 3^{rd} Generation Partnership Project (3GPP), Long Term Evolution (LTE), and/or the like.

According to various embodiments of the present disclosure, the communicator 120 may transmit a control command responding to the user message to an external apparatus 30, and may receive feedback information responding to the control command from the external apparatus 30. In addition, the communicator 120 may download or otherwise receive a service program from an external service storage server 20.

According to various embodiments of the present disclosure, the image receiver 140 may receive image data from various sources. For example, the image receiver 140 may receive broadcasting data from an external broadcasting station and may receive image data from an external apparatus (e.g., a Digital Versatile Disk (DVD) apparatus).

According to various embodiments of the present disclosure, the audio outputter 150 is configured to output not only various audio data processed by the audio processor 180 but also various notice sounds or voice messages. In particular, if the response message corresponding to the feedback information received from the external apparatus 30 is displayed, then the audio outputter 150 may output a notice sound informing that the response message is displayed. For example, in response to displaying the response message corresponding to the feedback information, the audio outputter 150 may output the notice sound.

According to various embodiments of the present disclosure, the storage 160 stores various modules for driving the electronic apparatus 100. For example, the storage 160 may store software including a base module, a sensing module, a communication module, a presentation module, a web browser module, a service module, and/or the like. In this case, the base module refers to a module which processes signals transmitted from each hardware included in the electronic apparatus 100 and transmits the signals to an upper layer module. The sensing module is a module which collects information from various sensors, and analyzes and/or manages the collected information. The sensing module may include a face recognition module, a voice recognition module, a motion recognition module, an NFC recognition module, and/or the like. The presentation module is a module which generates a display screen, and includes a multimedia module to reproduce multimedia content and output the multimedia content, and a UI rendering module to process a UI and graphics. The communication module is a module for communicating with an external apparatus. The web browser module is a module for performing web browsing and accessing a web server. The service module is a module including various applications for providing various services.

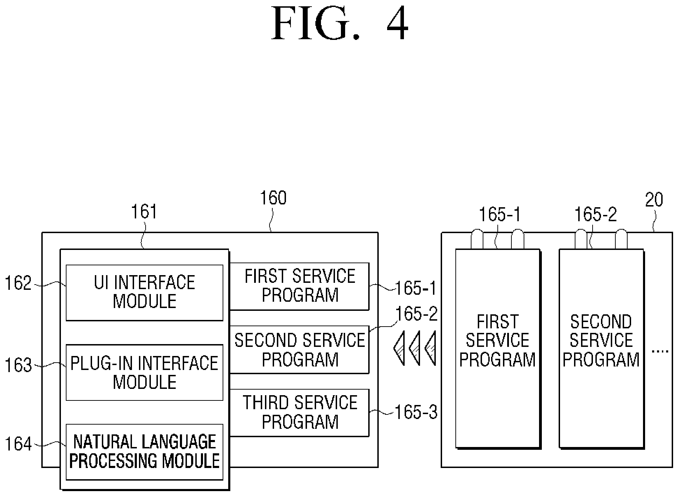

According to various embodiments of the present disclosure, the storage 160 may store various programs for the interactive application. The interactive application stored in the storage 160 will be explained below with reference to FIG. 4.

FIG. 4 is a view to illustrate an interactive application stored in a storage according to an embodiment of the present disclosure.

Referring to FIG. 4, the storage 160 may include an interactive application. The interactive application includes a platform program 161 and a plurality of service programs 165-1, 165-2, and 165-3. In particular, the platform program 161 includes a UI interface module 162, a plug-in interface module 163, a natural language processing module 164, and/or the like.

According to various embodiments of the present disclosure, the UI interface module 162 provides various UIs for performing the interactive application. In particular, the UI interface module 162 may include UI data regarding the chatting screen for chatting (e.g., communicating) with at least one service.

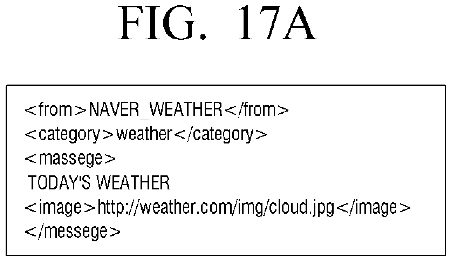

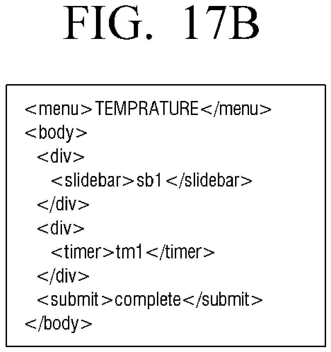

FIGS. 17A and 17B are views to illustrate a language defined in a plug-in interface module according to an embodiment of the present disclosure.

Referring to FIGS. 17A and 17B, the plug-in interface may define a language (e.g., a programming language) for communicating and/or executing a service program. The plug-in interface module 163 includes an Application Program Interface (API) to allow the plurality of service programs to be installed in the platform program and to perform services. According to various embodiments of the present disclosure, the plug-in interface module 163 defines the standard of the response message as illustrated in FIG. 17A. According to various embodiments of the present disclosure, the plug-in interface module 163 may provide a layout of a control menu for each service using a markup language as illustrated in FIG. 17B.

According to various embodiments of the present disclosure, the natural language processing module 164 performs a natural language processing function with respect to the user message input by the user. In particular, the platform program 161 includes the natural language processing module 164 so that the service provider can focus on the development of the service program without devoting significant resources on the natural language processing.

According to various embodiments of the present disclosure, the plurality of service programs 165-1, 165-2, and 165-3 may be downloaded from the external service storage server 20 and installed in the platform program 161. In particular, the plurality of service programs 165-1, 165-2, and 165-3 may be added on the platform program 161 through the plug-in interface module 163.

Referring back to FIG. 3, the image processor 170 is an element for processing the image data received from the image receiver 140. The image processor 170 may perform various image processing operations such as decoding, scaling, noise filtering, frame rate conversion, resolution conversion, and/or the like with respect to the image data.

According to various embodiments of the present disclosure, the audio processor 180 is an element for processing audio data. The audio processor 180 may perform various processing operations such as decoding, amplification, noise filtering, and/or the like with respect to the audio data. The audio data processed by the audio processor 180 may be output to the audio outputter 150.

According to various embodiments of the present disclosure, the inputter 190 receives a user command to control an overall operation of the electronic apparatus 100. In particular, the inputter 190 may receive a user command to execute the interactive application or a user command to select a service that the user wishes to execute.

According to various embodiments of the present disclosure, the inputter 190 may be implemented by using a touch panel. However, the implementation of the inputter 190 as a touch panel is merely an example. According to various embodiments of the present disclosure, the inputter 190 may be implemented by using other input apparatuses that can control the electronic apparatus 100 such as a remote controller, a pointing device, and/or the like.

According to various embodiments of the present disclosure, the controller 130 controls the overall operation of the electronic apparatus 100 using various programs stored in the storage 160.

As illustrated in FIG. 3, the controller 130 includes a Random Access Memory (RAM) 131, a Read Only Memory (ROM) 132, a graphic processor 133, a main Central Processing Unit (CPU) 134, first to nth interfaces 135-1∼135-n, and a bus 136. The RAM 131, the ROM 132, the graphic processor 133, the main CPU 134, and the first to the nth interfaces 135-1∼135-n may be connected to one another through the bus 136.

According to various embodiments of the present disclosure, ROM 132 stores a set of commands to boot the system. If a turn on command is input and power is supplied, then the main CPU 134 copies an Operating System (O/S) stored in the storage 160 into the RAM 131 according to a command stored in the ROM 132, executes the O/S, and boots the system. If the booting is completed, then the main CPU 134 copies the various programs stored in the storage 160 into the RAM 131, executes the programs copied into the RAM 131, and performs various operations.

According to various embodiments of the present disclosure, the graphic processor 133 generates a screen including various objects such as an icon, an image, and text using a calculator (not shown) and a renderer (not shown). The calculator calculates attribute values of each object to be displayed, such as coordinates values, a shape, a size, a color, and/or the like according to a layout of the screen using the control command received from the inputter 190. The renderer generates a screen of various layouts including objects based on the attribute values calculated by the calculator. The screen generated by the renderer is displayed on a display area of the display 110.

According to various embodiments of the present disclosure, the main CPU 134 accesses the storage 160 and performs booting using the O/S stored in the storage 160. The main CPU 134 performs various operations using the various programs, content, and data stored in the storage 160.

According to various embodiments of the present disclosure, the first to the nth interfaces 135-1 ∼135-n are connected to the above-described various elements. One of the first to the nth interfaces 135-1 ∼135-n may be a network interface which is connected to an external apparatus through a network.

In particular, the controller 130 may install the plurality of service programs 165-1, 165-2, and 165-3 which have been downloaded from the service storage server 20 through the communicator 120 in the platform program 161 of the interactive application stored in the storage 160.

According to various embodiments of the present disclosure, an execution command of the interactive application is input through the inputter 190, the controller 130 executes the interactive application. In this case, the execution command of the interactive application may be a user command to select an icon corresponding to the interactive application displayed on the display 110.

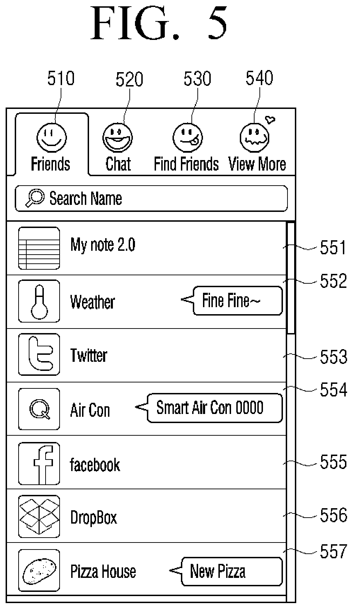

FIG. 5 is a view illustrating a starting screen of an interactive application according to an embodiment of the present disclosure.

Referring to FIG. 5, the interactive application is executed, the controller 130 may control the display 110 to display a starting screen of the interactive application. In particular, the starting screen of the interactive application may include a friend tab 510 which includes items corresponding to the services installed in the electronic apparatus 100, a chatting tab 520 which includes records of chatting (e.g., communicating) with the plurality of services, a friend finding tab 530 which shows services that are not installed in the electronic apparatus 100, and a view more menu 540 which includes setting items of the interactive application.

According to various embodiments of the present disclosure, if the friend tab 510 is selected, then the controller 130 may control the display 110 to display items 551, 552, 553, 554, 555, 556, and 557 corresponding to the services installed in the electronic apparatus 100. For example, as illustrated in FIG. 5, the controller 130 may control the display 110 to display an item 551 corresponding to a memo service, an item 552 corresponding to a weather information guidance service, an item 553 corresponding to a Twitter service, an item 554 corresponding to an air conditioner control service, an item 555 corresponding to a Facebook service, an item 556 corresponding to a content storage service, an item 557 corresponding to a pizza buying service, and/or the like.

If at least one of the items 551, 552, 553, 554, 555, 556, and 557 corresponding to the plurality of services is selected through the inputter 190, then the controller 130 may control the display 110 to display a chatting screen for chatting (e.g., communicating) with the selected at least one service.

If a user message is input through the inputter 190, then the controller 130 may control the display 110 to display the input user message on the chatting screen in the form of a speech bubble, and may store the input user message in an application corresponding to the selected service using the service program or may analyze the input user message and may generate a control command corresponding to the user message.

For example, if the memo service is selected and a user message "Homework by tomorrow afternoon" is input on the chatting screen, then the controller 130 may store the user message "Homework by tomorrow afternoon" in a memo application. In addition, if a TV control service is selected and a user message "Schedule recording of Infinite Challenge today" is input, then the controller 130 may analyze the input user message, may generate a schedule recording command, and may control the communicator 120 to transmit the schedule recording command to an external apparatus (e.g., an external TV).

According to various embodiments of the present disclosure, if the input user message is a natural language rather than a pre-defined language, then the controller 130 may perform natural language processing with respect to the input user message and may analyze a control command corresponding to the input user message. For example, if a natural language "Please record Infinite Challenge on TV today!" is input on the chatting screen as the user message, then the controller 130 may process the input user message using the natural language processing module 164 included in the platform program 161 and may generate the schedule recording command.

According to various embodiments of the present disclosure, if feedback information is received in response to the control command, then the controller 130 may generate a response message corresponding to the feedback information using the service program and may control the display 110 to display the response message on the chatting screen.

Specifically, if feedback information indicating that the user message is stored in the memo application is received in response to the user message "Homework by tomorrow afternoon", then the controller 130 may generate a response message "Stored" corresponding to the feedback information and may control the display 110 to display the response message on the chatting screen in the form of a speech bubble. In addition, if feedback information confirming the schedule recording request is input from the TV in response to the user message "Schedule recording of Infinite Challenge today", then the controller 130 may generates a response message "We will schedule recording" corresponding to the feedback information, and may control the display 110 to display the response message on the chatting screen in the form of a speech bubble.

Hereinafter, a method for chatting (e.g., communicating) with various services through a chatting screen according to various embodiments will be explained.

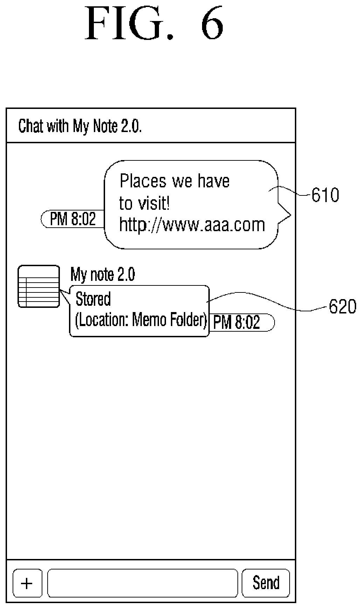

FIG. 6 is a view illustrating method for providing a service using an interactive application according to an embodiment of the present disclosure.

Referring to FIG. 6, a chatting screen for chatting with a memo service according to various embodiments of the present disclosure is illustrated.

First, when the item 551 corresponding to the memo service, "My note 2.0", is selected from among the plurality of items 551 to 557 included in the starting screen of the interactive application in FIG. 5, the controller 130 may control the display 110 to display a chatting screen for chatting (e.g., communicating) with the memo service.

If a user message "Top 50 places to visit before you die!! http://www.aaa.com" is input while the chatting screen is displayed, then the controller 130 may control the display 110 to display the input user message 610 on the chatting screen in the form of a speech bubble, and may store the user message in a memo application corresponding to the memo service using a memo service program.

In addition, if feedback information indicating that the user message has been stored in a memo folder is received from the memo application, then the controller 130 may generate a response message "Stored (Location: Memo Folder)" corresponding to the received feedback information using the memo service program, and may control the display 110 to display the response message 620 in the form of a speech bubble as illustrated in FIG. 6.

In this case, the response message "(Location: Memo Folder)" includes link information, and, if "Memo Folder" is selected, then the controller 130 may control the display 110 to move to the memo folder at which the user message is stored.

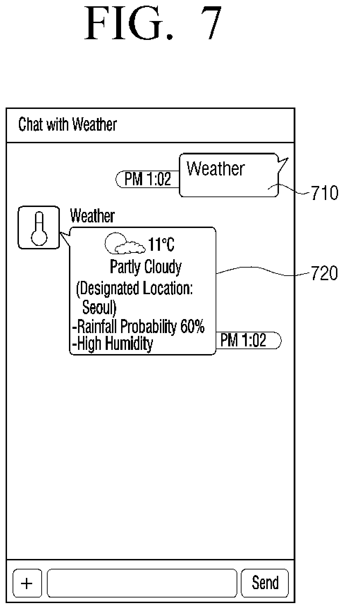

FIG. 7 is a view illustrating a method for providing a service using an interactive application according to an embodiment of the present disclosure.

Referring to FIG. 7, a chatting screen for chatting with a weather information guidance service according to various embodiments of the present disclosure is illustrated.

First, if the item 552 corresponding to the weather information guidance service, "Weather", is selected from among the plurality of items 551 to 557 included in the starting screen of the interactive application in FIG. 5, then the controller 130 may control the display 110 to display a chatting screen for chatting (e.g., communicating) with the weather information guidance service.

If a user message "Weather" is input while the chatting screen is displayed, the controller 130 controls the display 110 to display the input user message 710 in the form of a speech bubble. In addition, the controller 130 may analyze the input user message using a weather information providing service program, may generate a control command "Request current weather information", and may control the communicator 120 to transmit the control command to an external weather information providing server. In this case, if the electronic apparatus 100 stores Global Positioning System (GPS) information indicating a current location thereof, the controller 130 may transmit the GPS information to the weather information providing server along with the control command.

If feedback information including current weather information of the current location (e.g., the location is assumed to be Seoul) is received from the weather information providing server, then the controller 130 may generate a response message indicating current weather information of Seoul corresponding to the received feedback information using the weather information providing service program, and may control the display 110 to display the response message 720 in the form of a speech bubble as illustrated in FIG. 7. In this case, the response message may include current weather information, current location information, future weather information, and/or the like.

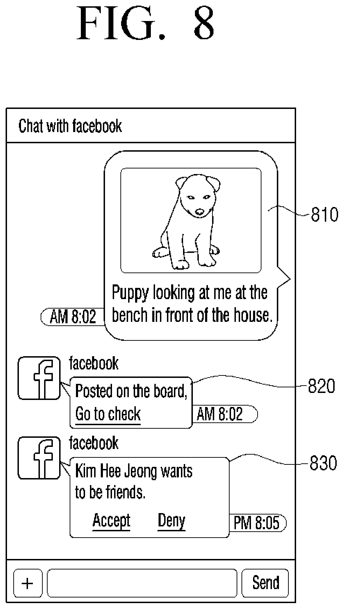

FIG. 8 is a view illustrating a method for providing a service using an interactive application according to an embodiment of the present disclosure.

Referring to FIG. 8, a chatting screen for chatting with a social network service according to an embodiment of the present disclosure is illustrated.

First, if the item 555 corresponding to the Facebook service, "Facebook", is selected from among the plurality of items 551 to 557 included in the starting screen of the interactive application in FIG. 5, then the controller 130 may control the display 110 to display a chatting screen for chatting (e.g., communicating) with the Facebook service.

If an image content and a user message "Puppy looking at me at the bench in front of the house!" are input while the chatting screen is displayed, then the controller 130 controls the display 110 to display the input user message 810 in the form of a speech bubble. In addition, the controller 130 may analyze the user message using a Facebook service program, may generate a control command to upload the image content and the user message "Puppy looking at me at the bench in front of the house!" to the Facebook server, and may control the communicator 120 to transmit the control command to the external Facebook server.

If feedback information indicating that the image content and the user message have been currently uploaded is received from the Facebook server, then the controller 130 may generate a response message "Posted on the board. Go to check" corresponding the feedback information using the Facebook service program, and may control the display 110 to display the response message 820 in the form of a speech bubble as illustrated in FIG. 8.

In this case, the response message "Go to check" includes link information, and, if "Go to check" is selected, then the controller 130 may execute the Facebook application and control the display 110 to move to the page where the image content and the user message are uploaded.

In addition, if event information is received from the Facebook application (e.g., an indication of comment posted by a contact, a friend request, a message, and/or the like), the controller 130 may generate a message corresponding to the event information using the Facebook service program, and control the display 110 to display the message. Specifically, if event information "friend request" is received from the Facebook application, then the controller 130 may generate a request message corresponding to the event information "friend request" and control the display 110 to display the request message 830 in the form of a speech bubble, as illustrated in FIG. 8. In this case, the generated message may include information on a person who has sent the friend request and accept/deny icons of the friend request.

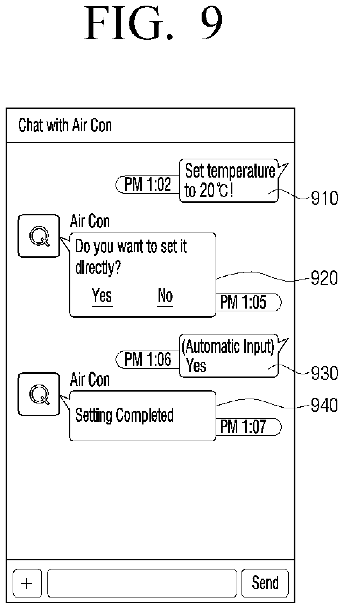

FIG. 9 is a view illustrating a method of providing a service using an interactive application according to an embodiment of the present disclosure.

Referring to FIG. 9, a chatting screen for chatting with an external apparatus control service according to an embodiment of the present disclosure is provided.

First, if the item 554 corresponding to the air conditioner control service, "Air con", is selected from among the plurality of items 551 to 557 included in the starting screen of the interactive application in FIG. 5, then the controller 130 may control the display 110 to display a chatting screen for chatting (e.g., communicating) with the air conditioner control service.

If an image content and a user message "Set to 20°C" are input while the chatting screen is displayed, then the controller 130 controls the display 110 to display the input user message 910 in the form of a speech bubble. The controller 130 may analyze the user message using an air conditioner control service program and may control the display 110 to display an inquiry message 920 corresponding to the input message in the form of a speech bubble. In this case, the inquiry message may include icons for inquiring whether to execute or not.

If a user command "adjust temperature" is input through the inquiry message, then the controller 130 controls the display 110 to display a confirmation message 930. The controller 130 may generate a control command to adjust the temperature of the air conditioner, which corresponds to the input user message 910 and the confirmation message 930, using the air conditioner control service program, and may control the communicator 120 to transmit the control command to the external air conditioner.

If feedback information indicating that the temperature has been adjusted is received from the air conditioner, then the controller 130 may generate a response message "Setting Completed" corresponding to the received feedback information using the air conditioner control service program, and may control the display 110 to display the response message 940 in the form of a speech bubble as illustrated in FIG. 9.

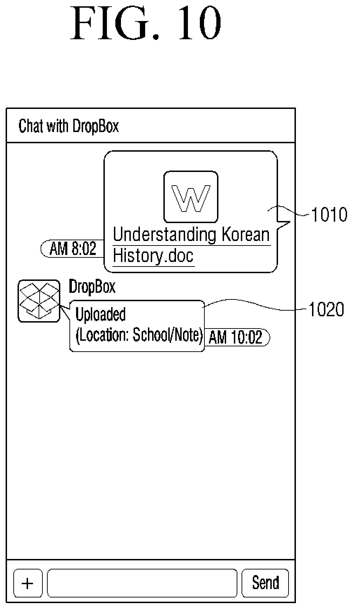

FIG. 10 is a view illustrating a method for providing a service using an interactive application according an embodiment of the present disclosure.

Referring to FIG. 10, a chatting screen for chatting with a content storage service according an embodiment of the present disclosure is provided.

First, if the item 556 corresponding to the content storage service, "DropBox", is selected from among the plurality of items 551 to 557 included in the starting screen of the interactive application in FIG. 5, then the controller 130 may control the display 110 to display a chatting screen for chatting (e.g., communicating) with the content storage service.

If a document content (e.g., Understanding Korean History.docx) is input as a user message while the chatting screen is displayed, then the controller 130 may control the display 110 to display a user message 1010 corresponding to the input document content on the chatting screen in the form of a speech bubble, and may control the communicator 120 to transmit the document content to an external server, which performs the content storage service, using a content storage service program.

If feedback information indicating that the document content has been uploaded is received from the external server, then the controller 130 may generate a response message "Uploaded (Location: School 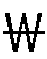 Lecture note)" corresponding to the feedback information using the content storage service program, and may control the display 110 to display the response message 1020 in the form of a speech bubble as illustrated in FIG. 10.

In this case, the response message "(Location: School 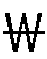 Lecture note)" includes link information, and, if "(Location: School 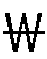 Lecture note)" is selected, then the controller 130 may control the display 110 to move to the folder of "School 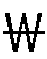 Lecture note" at which the document content is stored.

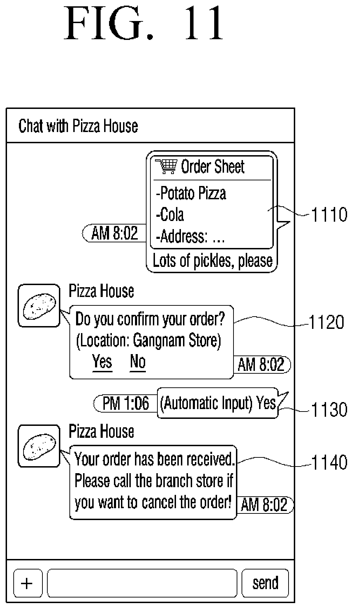

FIG. 11 is a view illustrating a method for providing a service using an interactive application according to an embodiment of the present disclosure.

Referring to FIG. 11, a chatting screen for chatting with a pizza buying service according to an embodiment of the present disclosure is provided.

First, if the item 557 corresponding to the pizza buying service, "Pizza House", is selected from among the plurality of items 551 to 557 included in the starting screen of the interactive application in FIG. 5, then the controller 130 may control the display 110 to display a chatting screen for chatting (e.g., communicating) with the pizza buying service.

If a user message including an order is input while the chatting screen is displayed, then the controller 130 may control the display 110 to display the user message 1110 corresponding to the input order on the chatting screen in the form of a speech bubble. In addition, the controller 130 may control the display 110 to display an inquiry message 1120 inquiring about a confirmation of the order using a pizza buying service program.

If a confirmation message confirming buying of the pizza is input through the inquiry message, then the controller 130 may control the display 110 to display the confirmation message 1130, and may control the communicator 120 to transmit a pizza buying request command corresponding to the user message 1110 and the confirmation message 1130 to an external pizza house server using the pizza buying service program. The confirmation message may be input automatically according to user settings, user preferences, and/or the like.

If feedback information indicating that the pizza order has been received is received from the pizza house server, then the controller 130 may generate a response message "Your order has been received. Please call the branch store if you want to cancel the order!" corresponding to the feedback information using the pizza buying service program, and may control the display 110 to display the response message 1140 in the form of a speech bubble as illustrated in FIG. 11.

In the above-described various embodiments, the user chats with a single service. However, this is merely an example and the user may chat with a plurality of services.

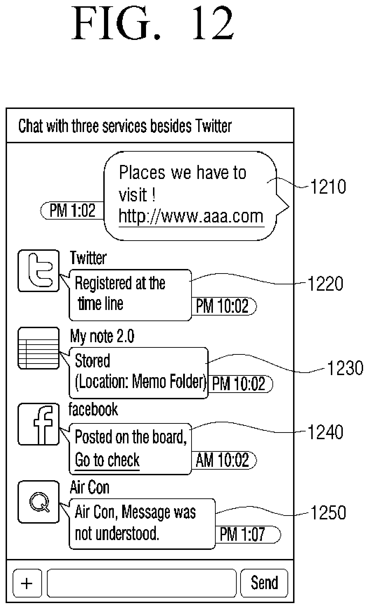

FIG. 12 is a view illustrating a method for providing a variety of services using an interactive application according to an embodiment of the present disclosure.

Referring to FIG. 12, a chatting screen for chatting with a plurality of services according to an embodiment of the present disclosure is provided.

First, if the item 551 corresponding to the memo service, "My note 2.0", the item 553 corresponding to the Twitter service, "Twitter", the item 555 corresponding to the Facebook service, "Facebook", and the item 554 corresponding to the air conditioner control service, "Air con", are selected from among the plurality of items 551 to 557 included in the starting screen of the interactive application in FIG. 5, then the controller 130 may control the display 110 to display a chatting screen for chatting (e.g., communicating) with the plurality of services.

If a user message "Top 50 places to visit before you die!! http://www.aaa.com" is input while the chatting screen is displayed, then the controller 130 may control the display 110 to display the input user message 1210 on the chatting screen in the form of a speech bubble, and may store the user message in the memo application corresponding to the memo service using the memo service program. In addition, the controller 130 may control the communicator 120 to transmit the user message to the external Twitter server and the Facebook server using the Twitter service program and the Facebook service program. In addition, the controller 130 may analyze the user message using the air conditioner control service program.

If feedback information indicating that the user message has been stored in the memo folder is received from the memo application, then the controller 130 may generate a response message "Stored (Location: Memo Folder)" corresponding to the feedback information using the memo service program, and may control the display 110 to display the response message 1230 in the form of a speech bubble as illustrated in FIG. 12.

In addition, if feedback information indicating that the user message has been uploaded is received from the Twitter server and the Facebook server, then the controller 130 may generate a response message corresponding to the feedback information using the Twitter service program and the Facebook service program, and may control the display 110 to display the response messages 1220 and 1240 in the form of a speech bubble as illustrated in FIG. 12. For example response message 1220 may correspond to a response message from the Twitter service program, the response message 1230 may correspond to a response message from a content storage service program, and the response message 1240 may correspond to a response from the Facebook service program.

However, if the air conditioner service program does not generate a corresponding control command as a result of analyzing the user message, and feedback information indicating that the air conditioner service program failed to analyze the message is input, then the controller 130 may control the display 110 to display a response message 1250 indicating that the user message was not recognized as illustrated in FIG. 12. For example, if the at least one service includes a service corresponding to an external apparatus that is not controlled by the control command, then the controller 130 may control the display 110 to display a message informing that the user message is not recognized on the chatting screen.

As described above, the user can perform the plurality of services simultaneously through the single user message by chatting (e.g., communicating) with the plurality of services on the single chatting screen.

In addition, if at least two services are selected from among the plurality of services through the starting screen, and feedback information received from an external apparatus corresponding to one of the at least two services is related to the other service, then the controller 130 may analyze the feedback information and control the communicator 120 to transmit a control command to an external apparatus corresponding to the other service of the at least two services.

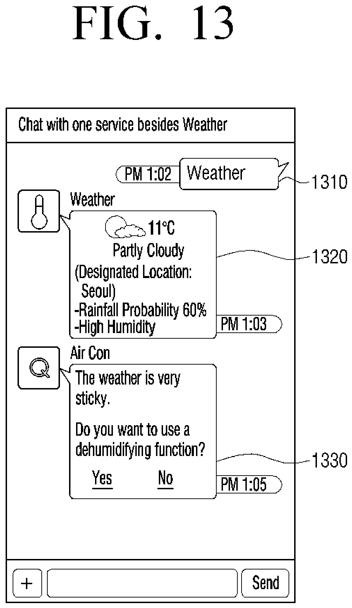

FIG. 13 is a view illustrating a method for providing a variety of services using an interactive application according to an embodiment of the present disclosure.

Referring to FIG. 13, a chatting screen for chatting with a weather information guidance service and an air conditioner control service according to an embodiment of the present disclosure is provided.

First, if the item 552 corresponding to the weather information guidance service, "Weather", and the item 554 corresponding to the air conditioner control service, "Air con", are selected from among the plurality of items 551 to 557 included in the starting screen of the interactive application in FIG. 5, then the controller 130 may control the display 110 to display a chatting screen for chatting (e.g., communicating) with the weather information guidance service and the air conditioner control service.

If a user message "Weather" is input while the chatting screen is displayed, then the controller 130 controls the display 110 to display the user message 1310 in the form of a speech bubble. The controller 130 may analyze the user message using the weather information providing service program, may generate a control command "Request current weather information", and may control the communicator 120 to transmit the control command to an external weather information providing server. In this case, if the electronic apparatus 100 stores GPS information indicating a current location, then the controller 130 may transmit the GPS information to the weather information providing server along with the control command.

If feedback information including current weather information of the current location (e.g., the location is assumed to be Seoul) is received from the weather information providing server, then the controller 130 may generate a response message indicating the current weather information of Seoul corresponding to the feedback information using the weather information providing service program, and may control the display 110 to display the response message 1320 in the form of a speech bubble as illustrated in FIG. 13. The response message may include current weather information, current location information, future weather information, and/or the like.

In addition, if the feedback information is determined to be related to the air conditioner control service using the air conditioner control service program, then the controller 130 may generate an inquiry message based on the feedback information using the air conditioner control service program, and may control the display 110 to display the inquiry message 1330 inquiring about whether the user wants to use a dehumidifying function of the air conditioner as illustrated in FIG. 13.

If a confirmation message on the performance of the dehumidifying function of the air conditioner is input through the inquiry message, then the controller 130 may control the communicator 120 to transmit a control command to perform the dehumidifying function of the air conditioner to an external air conditioner based on the confirmation message.

Accordingly, if feedback information of one of the plurality of services is related to another service, then a function related to another service is automatically provided, so that the user can perform the related services simultaneously.

In addition, in order to perform the services more easily, the chatting screen includes an icon for entering a control menu to generate a control command.

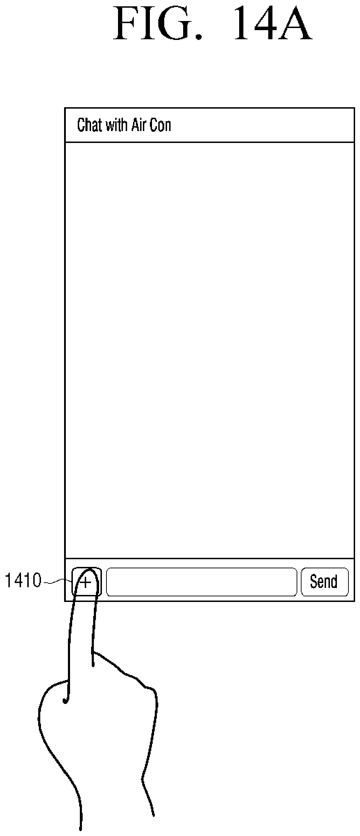

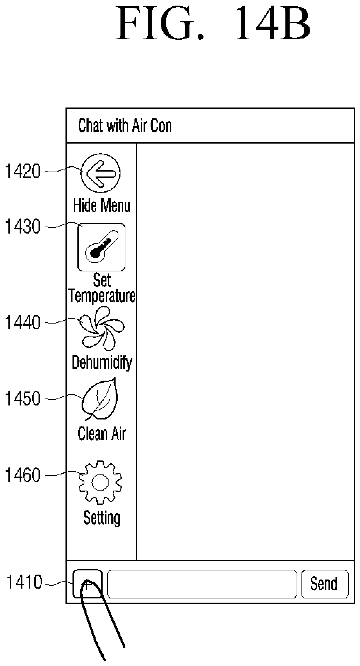

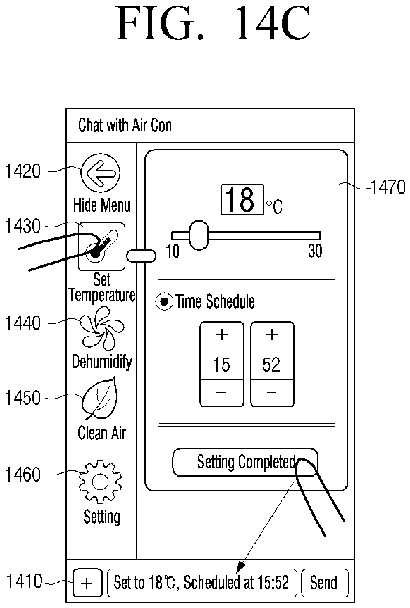

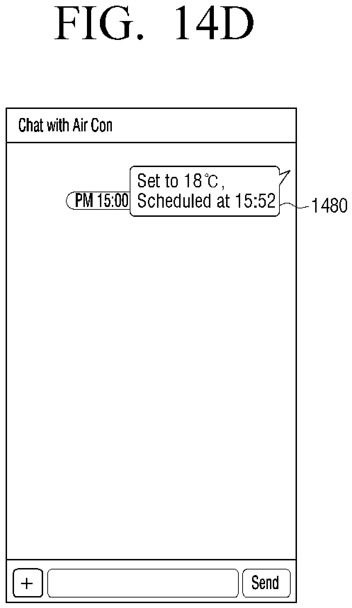

FIGS. 14A, 14B, 14C, and 14D are views to illustrate a method for providing a variety of services using an interactive application according to an embodiment of the present disclosure.

Referring to FIGS. 14A, 14B, 14C, and 14D, if an icon displayed on a predetermined area of the chatting screen is selected, then the controller 130 may control the display 110 to display a control menu to generate a control command related to the service that the user is currently chatting (e.g., communicating) with on the chatting screen. For example, if an icon 1410 displayed next to a text input window of the chatting screen is selected as illustrated in FIG. 14A, then the controller 130 may control the display 110 to display a control menu to generate a control command related to the air conditioner control service that the user is currently chatting with as illustrated in FIG. 14B. In this case, the control menu may include a menu hiding icon 1420, a temperature setting icon 1430, a dehumidifying icon 1440, an air cleaning icon 1450, and a setting icon 1460.

If the temperature setting icon 1430 is selected from among the plurality of icons 1420 to 1460 of the control menu, then the controller 130 may control the display 110 to display a temperature setting menu screen 1470 as illustrated in FIG. 14C.

If a temperature is set through the temperature setting menu screen 1470 and a setting complete button is input, then the controller 130 may input temperature setting set by the user as a user message, as displayed on the text input window of the chatting screen of FIG. 14C.

If a send button is selected, then the controller 130 may control the display 110 to display the temperature setting on the chatting screen as a user message 1480 as illustrated in FIG. 14D.

As described above, the user message may be generated through the control menu so that the user can control the external apparatus more intuitively.

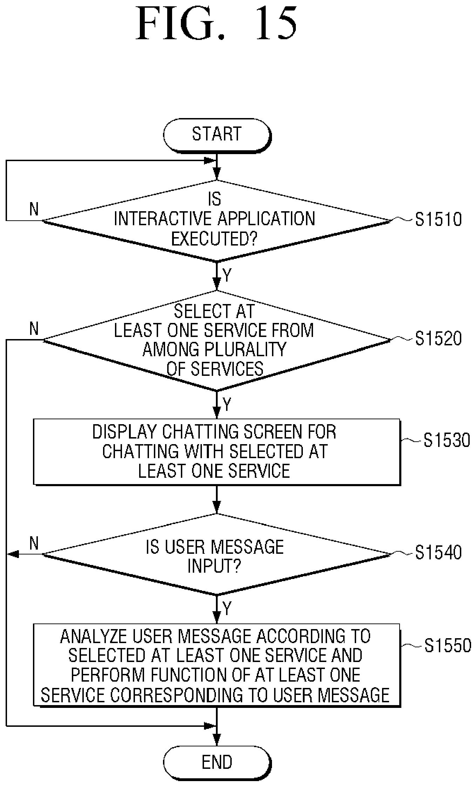

Hereinafter, a method for providing a service of an electronic apparatus will be explained with reference to FIG. 15.

FIG. 15 is a flowchart to illustrate a method for providing a service of an electronic apparatus according to an embodiment of the present disclosure.

Referring to FIG. 15, at operation S1510, an electronic apparatus 100 determines whether an interactive application is executed. In this case, the interactive application may be executed by selecting an icon corresponding to the interactive application on a display screen.

If the electronic apparatus 100 determines that the interactive application is not executed at operation S1510, then the electronic apparatus 100 may return to operation S1510 at which the electronic apparatus 100 may continue to poll for an indication that an interactive application is executed.

If the electronic apparatus 100 determines that the interactive application is executed at operation S1510, then the electronic apparatus 100 may proceed to operation S1520 at which the electronic apparatus 100 determines whether at least one of a plurality of services is selected. Specifically, if the interactive application is executed, then the electronic apparatus 100 may display a UI for selecting at least one of the plurality of services, and may select at least one of the plurality of services according to a user command input to the UI.

If the electronic apparatus 100 determines that the at least one service is not selected at operation S1520, then the electronic apparatus 100 may end the method for providing the service.

If the electronic apparatus 100 determines that the at least one service is selected at operation S1520, then the electronic apparatus 100 may proceed to operation S1530 at which the electronic apparatus 100 displays a chatting screen for chatting (e.g., communicating) with the selected at least one service. Specifically, if the interactive application is executed, then the electronic apparatus 100 receives a user command to select at least one service to chat with from among the plurality of installed services. If at least one service is selected from among the plurality of services, then the electronic apparatus 100 may display a chatting screen for chatting (e.g., communicating) with the selected at least one service.

At operation S1540, the electronic apparatus 100 determines whether a user message is input.

If the electronic apparatus 100 determines that the user message is not input at operation S1540, then the electronic apparatus 100 may end the method for providing the service.

If the electronic apparatus 100 determines that the user message is input at operation S1540, then the electronic apparatus 100 may proceed to operation S1550 at which the electronic apparatus 100 analyzes the user message according to the selected at least one service and performs a function of the at least one service corresponding to the user message. Specifically, if the selected at least one service includes a service for controlling the electronic apparatus 100, then the electronic apparatus 100 may analyze the user message, may generate a control command, and may control the electronic apparatus 100 according to the control command. In addition, if the selected at least one service includes a service for using an external apparatus 30, then the electronic apparatus 100 may analyze the user message, may generate a control command, and may control the communicator 120 to transmit the control command to the external apparatus 30 corresponding to the at least one service. According to various embodiments of the present disclosure, if a plurality of services are selected, then the electronic apparatus 100 may transmit a control command which is generated by analyzing the user message to external apparatuses corresponding the plurality of services.

According to various embodiments of the present disclosure, if a first service is selected, then the electronic apparatus 100 may analyze the user message according to the first service, and, if a second service is selected, then the electronic apparatus 100 may analyze the user message according to the second service, even though the same user message is input. For example, if a user message "How's weather today?" is input and an SNS is selected, then the electronic apparatus 100 may analyze the input user message to correspond to the SNS and may generate a control command to upload a mention "How's weather today?" to an SNS server. However, if a weather information providing service is selected, the electronic apparatus 100 may analyze the input user message to correspond to the weather information providing service and may generate a control command to request information on today's weather.

In the above-described method, the user performs a variety of services through the single integrated chatting UI, so that the user can perform various services more easily and intuitively.

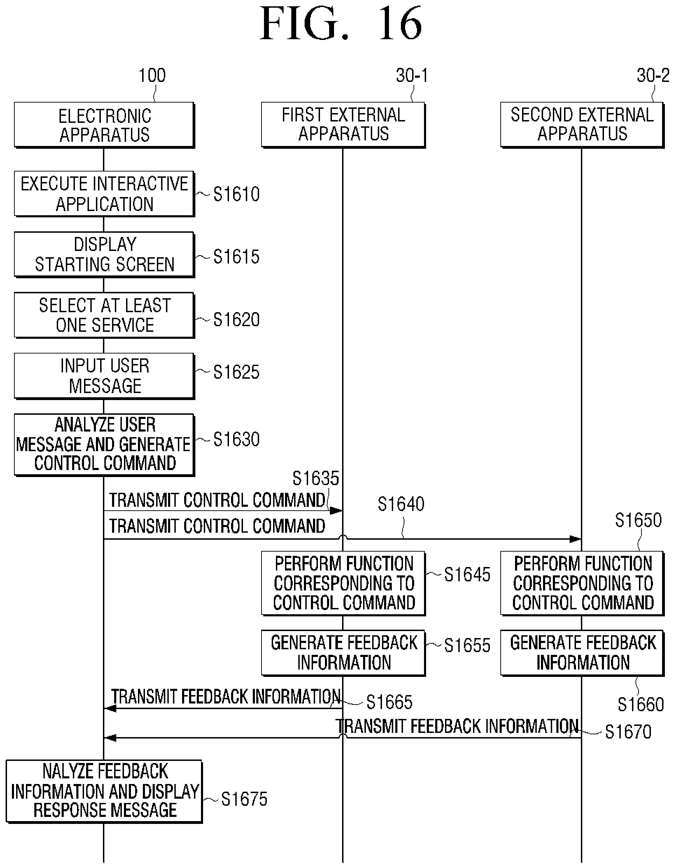

FIG. 16 is a sequence diagram to illustrate a method for providing a service in a service providing system according to an embodiment of the present disclosure.

Referring to FIG. 16, at operation S1610, an electronic apparatus 100 executes an interactive application according to a user command.

If the interactive application is executed at operation S1610, then the electronic apparatus 100 may proceed to operation S1615 at which the electronic apparatus 100 displays a starting screen of the interactive application. The starting screen of the interactive application may be the screen as illustrated in FIG. 5.

At operation S1620, electronic apparatus 100 selects at least one service to chat with from among the plurality of installed services through the starting screen. In this case, the electronic apparatus 100 may select a first service to control a first external apparatus 30-1 and a second service to control a second external apparatus 30-2.

At operation S1625, the electronic apparatus 100 receives a user message. In this case, the electronic apparatus 100 may display the user message.

At operation S1630, the electronic apparatus 100 analyzes the user message and generates a control command.

At operations S1635, the electronic apparatus 100 transmits the control command to the first external apparatus 30-1.

At operation S1640, the electronic apparatus 100 transmits the control command to the second external apparatus 30-2.

At operation S1645, the first external apparatus 30-1 performs functions corresponding to the control command.

At operation S1650, the second external apparatus 30-2 performs functions corresponding to the control command.

At operation S1655, the first external apparatus 30-1 generates feedback information corresponding to the user message.

At operation S1660, the second external apparatus 30-2 generates feedback information corresponding to the user message.

At operation S1665, the first external apparatus 30-1 transmits the feedback information to the electronic apparatus 100.

At operation S1670, the second external apparatus 30-2 transmits the feedback information to the electronic apparatus 100.

At operation S1675, the electronic apparatus 100 analyzes the feedback information received from the first external apparatus 30-1 and the second external apparatus 30-2, and display response messages corresponding to the feedback information.

As described above, the electronic apparatus 100 controls the external apparatuses by chatting (e.g., communicating) with the services to control the plurality of external apparatuses, so that the user can perform the plurality of services simultaneously more easily and intuitively.

In the above-described various embodiments, the user message is input from the user first. However, the user message being input from the user first is merely an example. According to various embodiments of the present disclosure, if a predetermined event occurs in one of the plurality of services, then a service program corresponding to the service may output an event message first. For example, if an event in which weather information is received from the weather information providing server occurs, then the controller 130 may analyze the event and may control the display 110 to display an event message including the weather information on the chatting screen. As another example, if an event in which information indicating that a friend's mention has been uploaded is received from a social network server occurs, then the controller 130 may analyze the event and may control the display 110 to display an event message indicating that the friend's mention has been uploaded on the chatting screen. As another example, if an event in which predetermined information (e.g., information on a current house temperature) is received from an external apparatus (e.g., an air conditioner) occurs, then the controller 130 may analyze the event and may control the display 110 to display an event message including the received information on the chatting screen.

According to various embodiments of the present disclosure, if the received event is related to another service of the plurality of services, then the controller 130 may analyze the event and may control the communicator 120 to transmit a control command to an external apparatus corresponding to the another service. Specifically, if the event in which weather information is received from the weather information providing server occurs, then the controller 130 may analyze the event and may control the display 110 to display the event message including the weather information on the chatting screen. In addition, the controller 130 may control the display 110 to display an inquiry message to generate a temperature adjusting command to perform an air conditioner control service, which is related to the weather information. If a user command to transmit the temperature adjusting command is input through the inquiry message, then the controller 130 may generate the temperature adjusting command and may control the communicator 120 to transmit the temperature adjusting command to an external air conditioner.

The method for providing the service according to the above-described various embodiments of the present disclosure may be implemented as a program and provided to a display apparatus. In addition, a non-transitory computer readable medium storing the program may be provided. The non-transitory computer readable medium refers to a medium that stores data semi-permanently rather than storing data for a very short time, such as a register, a cache, and a memory, and is readable by an apparatus. Specifically, the above-described various applications or programs may be stored in a non-transitory computer readable medium such as a Compact Disc (CD), a Digital Versatile Disk (DVD), a hard disk, a Blu-ray disk, a Universal Serial Bus (USB), a memory card, and a Read Only Memory (ROM), and may be provided.

While the present disclosure has been shown and described with reference to various embodiments thereof, it will be understood by those skilled in the art that various changes in form and details may be made therein without departing from the present disclosure as defined by the appended claims and their equivalents.

## Claims

1. A method for providing a service of an electronic apparatus (100), the method **characterised by** comprising:
executing (S1610) an interactive application which integrates a plurality of services and provides the plurality of services;
in response to a selection (S1620) of at least one of the plurality of services, performing a first displaying operation to display a chatting screen of the interactive application for chatting with the at least one selected service;
in response to input (S1625) of a user message through the chatting screen:
analyzing the user message according to the at least one selected service;
generating a control command (S1630) corresponding to the user message;
transmitting the control command (S1635) to an external apparatus (30) corresponding to the at least one selected service; and
performing, by the external apparatus, a function of the one or more of the at least one selected service corresponding to the user message; and in response to receiving feedback information responding to the control command from the external apparatus, performing (S1675) a second displaying operation to generate a response message corresponding to the feedback information and displaying the response message on the chatting screen.

2. The method of claim 1, wherein the user message and the response message are displayed on the chatting screen in a form of a speech bubble.

3. The method of claim 1, wherein the performing of the first displaying operation comprises:
in response to execution (S1610) of the interactive application, displaying a User Interface, UI, to select at least one service from among the plurality of services; and
in response to selection (S1620) of at least one of the plurality of services through the UI, displaying a chatting screen for chatting with the at least one selected service.

4. The method of claim 3, further comprising:
in response to selection (S1620) of at least two services from among the plurality of services through the UI, and if the feedback information received from an external apparatus corresponding to one of the at least two selected services is information related to the other service of the at least two selected services, analyzing the feedback information and transmitting a control command to an external apparatus corresponding to the other service of the at least two selected services.

5. The method of claim 1, wherein the performing (S1675) of the second displaying operation comprises:
if the at least one selected service comprises a service corresponding to an apparatus that is not controlled by the control command, displaying a message informing that the user message is not recognized on the chatting screen.

6. The method of any one of claims 1 to 5, further comprising performing a function corresponding to the at least one selected service in the electronic apparatus (100) according to the control command.

7. The method of any one of claims 1 to 6, wherein the interactive application comprises a plurality of programs to provide the plurality of services, and a platform program in which the plurality of programs are added on and which integrates and manages the plurality of services.

8. The method of claim 7, further comprising that, in response to input of the user message, generating a control command (S1630) corresponding to the user message by performing natural language processing with respect to the user message in the platform program.

9. The method of claim 8, further comprising that in response to downloading of a program for providing a service according to a user command, installing the downloaded program in the platform program.

10. The method of any one of claims 1 to 9, further comprising:
in response to selection of a predetermined icon existing on the chatting screen, displaying a control menu to control the at least one selected service.

11. The method of any one of claims 1 to 10, wherein the plurality of services comprise at least one of a scheduling service, a memo service, a weather information providing service, a social network service, an external apparatus control service, a product purchasing service, and a content storage service.

12. An electronic apparatus (100) comprising means for carrying out the method steps of claims 1-11.

## Patentansprüche

1. Ein Verfahren zur Bereitstellung eines Dienstes einer elektronischen Vorrichtung (100), wobei das Verfahren **dadurch gekennzeichnet ist, dass** es Folgendes umfasst:
Ausführen (S1610) einer interaktiven Anwendung, die eine Vielzahl von Diensten integriert und die Vielzahl von Diensten bereitstellt;
Durchführen eines ersten Anzeigevorgangs infolge einer Auswahl (S1620) von mindestens einem Dienst aus der Vielzahl von Diensten, um einen Kommunikationsbildschirm der interaktiven Anwendung für die Kommunikation mit dem mindestens einen ausgewählten Dienst anzuzeigen;
infolge der Eingabe (S1625) einer Benutzernachricht über den Kommunikationsbildschirm:
Analysieren der Benutzernachricht entsprechend dem mindestens einen ausgewählten Dienst;
Generieren eines Steuerungsbefehls (SI630) entsprechend der Benutzernachricht;
Übertragen des Steuerungsbefehls (S1635) an eine externe Vorrichtung (30), die dem mindestens einen ausgewählten Dienst entspricht; und
Durchführen einer Funktion des mindestens einen ausgewählten Dienstes über die externe Vorrichtung entsprechend der Benutzernachricht; und
Durchführen (S1675) eines zweiten Anzeigevorgangs infolge des Empfangs von Rückmeldungsinformationen als Antwort auf den Steuerungsbefehl von der externen Vorrichtung, um eine den Rückmeldungsinformationen entsprechende Antwortnachricht zu generieren, und Anzeigen der Antwortnachricht auf dem Kommunikationsbildschirm.

2. Das Verfahren nach Anspruch 1, wobei die Benutzernachricht und die Antwortnachricht in Form eine Sprechblase auf dem Kommunikationsbildschirm angezeigt werden.

3. Das Verfahren nach Anspruch 1, wobei die Durchführung des ersten Anzeigevorgangs Folgendes umfasst:
Anzeigen einer Benutzerschnittstelle (User Interface, UI) infolge der Ausführung (S610) der interaktiven Anwendung, um mindestens einen Dienst aus der Vielzahl von Diensten auszuwählen; und
Anzeigen eines Kommunikationsbildschirms für die Kommunikation mit dem mindestens einen ausgewählten Dienst infolge der Auswahl (S1620) von mindestens einem Dienst aus der Vielzahl von Diensten über die UI.

4. Das Verfahren nach Anspruch 3, wobei dieses weiter Folgendes umfasst:
Analysieren der Rückmeldungsinformationen und Übertragen eines Steuerungsbefehls an eine externe Vorrichtung, die einem zweiten Dienst von mindestens zwei ausgewählten Diensten entspricht, infolge der Auswahl (S1620) von mindestens zwei Diensten aus der Vielzahl der Dienste über die UI, und sofern es sich bei den Rückmeldungsinformationen, die von einer externen Vorrichtung entsprechend einem ersten der mindestens zwei ausgewählten Dienste empfangen wurden, um Informationen im Zusammenhang mit dem zweiten Dienst der mindestens zwei ausgewählten Dienste handelt.

5. Das Verfahren nach Anspruch 1, wobei die Durchführung (S1675) des zweiten Anzeigevorgangs Folgendes umfasst:
Anzeigen einer Nachricht mit dem Hinweis, dass die Benutzernachricht nicht auf dem Kommunikationsbildschirm erkannt wird, wenn der mindestens eine ausgewählte Dienst einen Dienst umfasst, der einer Vorrichtung entspricht, die nicht über den Steuerungsbefehl gesteuert wird.

6. Das Verfahren nach einem der Ansprüche 1 bis 5, wobei dieses weiter Folgendes umfasst:
Durchführen einer Funktion entsprechend dem mindestens einen ausgewählten Dienst in der elektronischen Vorrichtung (100) gemäß dem Steuerungsbefehl.

7. Das Verfahren nach einem der Ansprüche 1 bis 6, wobei die interaktive Anwendung eine Vielzahl von Programmen umfasst, um die Vielzahl von Diensten bereitzustellen, sowie ein Plattformprogramm aufweist, zu dem die Vielzahl von Programmen hinzugefügt wird und das die Vielzahl von Programmen integriert und verwaltet.

8. Das Verfahren nach Anspruch 7, das weiter das Generieren eines Steuerungsbefehls (S1630) entsprechend der Benutzernachricht infolge der Eingabe der Benutzernachricht umfasst, indem eine natürliche Sprachverarbeitung für die Benutzernachricht im Plattformprogramm durchgeführt wird.

9. Das Verfahren nach Anspruch 8, das weiter das Installieren eines heruntergeladenen Programms im Plattformprogramm infolge des Herunterladens des Programms zur Bereitstellung eines Dienstes entsprechend dem Benutzerbefehl umfasst.

10. Das Verfahren nach einem der Ansprüche 1 bis 9, wobei dieses weiter Folgendes umfasst:
Anzeigen eines Steuerungsmenüs infolge der Auswahl eines vordefinierten Symbols auf dem Kommunikationsbildschirm, um den mindestens einen ausgewählten Dienst zu steuern.

11. Das Verfahren nach einem der Ansprüche 1 bis 10, wobei die Vielzahl von Diensten mindestens einen Planungsdienst, einen Notizdienst, einen Dienst zur Bereitstellung von Wetterinformationen, einen Dienst für soziale Netzwerke, einen Dienst zur Steuerung einer externen Vorrichtung, einen Dienst für den Kauf von Produkten und einen Speicherdienst für Inhalte umfasst.

12. Eine elektronische Vorrichtung (100), welche Mittel zur Ausführung der Verfahrensschritte nach den Ansprüchen 1 bis 11 umfasst.

## Revendications

1. L'invention concerne une méthode pour fournir un service d'un appareil électronique (100), la méthode étant **caractérisée en ce qu'**elle comprend :
l'exécution (S1610) d'une application interactive intégrant une pluralité de services et fournissant une pluralité de services ;
en réponse à la sélection (S1620) d'au moins l'un de la pluralité de services, la réalisation d'une première opération d'affichage pour afficher l'écran de bavardage en ligne de l'application interactive pour bavarder en ligne avec au moins un service sélectionné ;
en réponse à la saisie (S1625) d'un message d'utilisateur par l'intermédiaire de l'écran de bavardage en ligne :
l'analyse du message d'utilisateur selon le ou les services sélectionnés ;
la production d'une commande de contrôle (S1630) correspondant au message d'utilisateur ;
la transmission de la commande de contrôle (S1635) à un appareil externe (30) correspondant au ou aux services sélectionnés ; et
la réalisation par l'appareil externe d'une fonction du ou des services sélectionnés correspondant au message d'utilisateur ; et
en réponse à la réception d'une information de rétroaction répondant à la commande de contrôle de l'appareil externe, la réalisation (S1675) d'une seconde opération d'affichage pour générer un message de réponse correspondant à l'information de rétroaction et l'affichage du message de réponse sur l'écran de bavardage en ligne.

2. La méthode selon la revendication 1, dans laquelle le message d'utilisateur et le message de réponse sont affichés sur l'écran de bavardage sous forme de phylactère.

3. La méthode selon la revendication 1, dans laquelle la réalisation de la première opération d'affichage comprend :
en réponse à l'exécution (S1610) de l'application interactive, l'affichage d'une interface utilisateur, UI, pour sélectionner au moins l'un des services de la pluralité de services ; et
en réponse à la sélection (S1620) d'au moins un service de la pluralité de services à l'aide de l'UI, l'affichage d'un écran de bavardage en ligne pour bavarder en ligne avec le ou les services sélectionnés.

4. La méthode selon la revendication 3, comprenant par ailleurs :
en réponse à la sélection (S1620) d'au moins deux services de la pluralité de services à l'aide de l'UI, et si l'information de rétroaction reçue d'un appareil externe correspondant à l'un des au moins deux services sélectionnés est une information liée à l'autre service des au moins deux services sélectionnés, l'analyse de l'information de rétroaction et la transmission d'une commande de contrôle à un appareil externe correspondant à l'autre service des au moins deux services sélectionnés.

5. La méthode selon la revendication 1, dans laquelle la réalisation (S1675) de la seconde opération d'affichage comprend :
si le ou les services sélectionnés comprennent un dispositif correspondant à un appareil non contrôlé par la commande de contrôle, l'affichage d'un message signalant que le message d'utilisateur n'est pas reconnu sur l'écran de bavardage en ligne.

6. La méthode selon l'une des revendications 1 à 5, comprenant par ailleurs :
la réalisation d'une fonction correspondant au ou aux services sélectionnés dans l'appareil électronique (100) selon la commande de contrôle.

7. La méthode selon l'une des revendications 1 à 6, dans laquelle l'application interactive comprend une pluralité de programmes pour fournir la pluralité de services, et une plateforme de programmation dans laquelle la pluralité de programmes est ajoutée et assurant l'intégration et la gestion de la pluralité de services.

8. La méthode selon la revendication 7, comprenant par ailleurs en réponse à la saisie du message d'utilisateur, la production d'une commande de contrôle (S1630) correspondant au message d'utilisateur en réalisant un traitement de langage naturel en fonction du message d'utilisateur dans la plateforme de programmation.

9. La méthode selon la revendication 8, comprenant par ailleurs en réponse au téléchargement d'un programme de fourniture d'un service en fonction d'une commande d'utilisateur, l'installation du programme téléchargé dans la plateforme de programmation.

10. La méthode selon l'une des revendications 1 à 9, comprenant par ailleurs :
en réponse à la sélection d'une icône prédéfinie existant sur l'écran de bavardage en ligne, l'affichage d'un menu de commande pour contrôler le ou les services sélectionnés.

11. La méthode selon l'une des revendications 1 à 10, dans laquelle la pluralité de services comprend au moins un service de planification, un service d'aide-mémoire, un service de fourniture d'informations météorologiques, un service de réseau social, un service de commande d'un appareil externe, un service d'achat de produits, et un service de stockage de contenus.

12. Un appareil électronique (100) comprenant des moyens de mise en oeuvre des étapes de la méthode décrites dans les revendications 1 à 11.
